# DEMANDE DE BREVET EUROPEEN

(11) **EP 2 749 454 A1**
(43) Date de publication de la demande: **02.07.2014**
(21) Numéro de dépôt: 13199190.3
(22) Date de dépôt: 20.12.2013
(51) Int. Cl.: B60R 5/04

(54) **Système de recouvrement des bagages pour un véhicule automobile**

(30) Priorité: 27.12.2012 FR 1262891
(71) Demandeur: CENTRE D'ETUDE ET DE RECHERCHE POUR L'AUTOMOBILE (CERA), 51100 Reims (FR)
(72) Inventeur: Brillon, Eric, 51390 Rosnay (FR); Crochet, Laurent, 51170 Fismes (FR); Debled, Emmanuel, 51500 Taissy (FR)
(74) Mandataire: Sayettat, Julien Christian

(57) **Abrégé**

L'invention concerne un système (1) de recouvrement des bagages pour un véhicule automobile comprenant un cache bagages et deux ébénisteries latérales (3), ledit cache bagages comprenant : un rideau souple et une bavette de rigidification comprenant deux parties latérales (9), pourvues sur leur face supérieure d'un moyen d'emboitement (10) respectif, lesdites parties latérales présentant une face inférieure de glissement (11); deux moyens ressort (12) montés respectivement en dessous desdites parties latérales, lesdits moyens présentant une zone inférieure d'appui (13), chacune desdites zones étant en retrait par rapport à la face de glissement correspondante ou affleurant ladite face, chacune desdites ébénisteries comprenant : une piste (14) de coulissement longitudinal d'une face de glissement respective ; un moyen d'emboîtement réciproque (15) et un bossage(16), lesdits moyens d'emboitement et d'emboitement réciproque étant agencés pour : s'emboiter entre eux sous la poussée desdits moyens ressort, lorsque leur zone d'appui entre en contact avec lesdits bossages ; et pour se déboiter les uns des autres par un appui exercé vers le bas sur ladite bavette, à l'encontre desdits moyens ressort.

## Description

L'invention concerne un système de recouvrement des bagages d'un véhicule automobile.

Il est connu de réaliser un système de recouvrement des bagages d'un véhicule automobile, ledit système comprenant un cache bagages et deux ébénisteries latérales de compartiment à bagages, ledit cache-bagages comprenant :
- un rideau souple comprenant un bord avant et un bord arrière,
- un dispositif de rappel dudit rideau associé audit bord avant, de sorte que ledit rideau soit mobile entre une configuration rétractée de rangement et une configuration déployée de recouvrement des bagages,
- une bavette de rigidification associée le long dudit bord arrière, ladite bavette comprenant deux parties latérales pourvues d'un moyen d'emboitement respectif,
chacune desdites ébénisteries comprenant :
- une piste de coulissement longitudinal d'une partie latérale respective,
- au moins un moyen d'emboîtement réciproque disposé de manière à définir au moins une position prédéfinie de verrouillage de ladite bavette permettant un recouvrement des bagages.

La position prédéfinie peut notamment être située en partie longitudinale intermédiaire des pistes de coulissement, correspondant à un déploiement partiel du rideau.

Ainsi, l'utilisateur n'a pas à retirer des objets éventuellement déposés sur le rideau lorsqu'il veut le rétracter partiellement pour faciliter l'accès au coffre du véhicule, lesdits objets étant retenus par la partie de rideau restant déployée.

En outre, la remise en place du rideau en configuration complètement déployée est facilitée dans la mesure où la bavette, qui doit être actionnée en traction vers l'arrière pour déployer ledit rideau, est plus proche de l'utilisateur que lorsque ledit rideau est en configuration rétractée.

La configuration complètement déployée du rideau correspond quant à elle à une position prédéfinie située à l'arrière des pistes de coulissement.

Les réalisations connues mettent souvent en jeu des agencements et/ou des manipulations complexes, pour assurer le verrouillage de la bavette selon une position prédéfinie.

L'invention a pour but de pallier ces inconvénients en proposant un système de recouvrement ergonomique et agencé de façon particulièrement simple.

A cet effet, l'invention propose un système de recouvrement des bagages pour un véhicule automobile, ledit système comprenant un cache bagages et deux ébénisteries latérales de compartiment à bagages, ledit cache bagages comprenant :
- un rideau souple comprenant un bord avant et un bord arrière,
- un dispositif de rappel dudit rideau associé audit bord avant, de sorte que ledit rideau soit mobile entre une configuration rétractée de rangement et au moins une configuration déployée de recouvrement des bagages,
- une bavette de rigidification associée le long dudit bord arrière, ladite bavette comprenant deux parties latérales, pourvues sur leur face supérieure d'un moyen d'emboitement respectif, lesdites parties latérales présentant une face inférieure de glissement,
- deux moyens ressort montés respectivement en dessous desdites parties latérales, lesdits moyens présentant une zone inférieure d'appui, chacune desdites zones étant en retrait par rapport à la face de glissement correspondante ou affleurant ladite face,
chacune desdites ébénisteries comprenant :
- une piste de coulissement longitudinal d'une face de glissement respective,
- un moyen d'emboîtement réciproque disposé au dessus et à distance de ladite piste, de manière à définir une position prédéfinie de verrouillage de ladite bavette permettant un recouvrement des bagages,
- un bossage disposé sur ladite piste sensiblement à l'aplomb dudit moyen réciproque,
lesdits moyens d'emboitement et d'emboitement réciproque étant agencés pour :
- s'emboiter entre eux sous la poussée desdits moyens ressort, lorsque leur zone d'appui entre en contact avec lesdits bossages par mise dudit rideau en configuration déployée, de manière à bloquer ledit rideau dans ladite configuration,
- et pour se déboiter les uns des autres par un appui exercé vers le bas sur ladite bavette, à l'encontre desdits moyens ressort, de manière à permettre le retour dudit rideau vers sa configuration rétractée.

Dans cette description, les termes de positionnement dans l'espace (bas, haut, inférieur, latéral, avant, arrière, vertical, dessous, dessus, supérieur, longitudinal,...) sont pris en référence au système disposé dans le véhicule.

Avec l'agencement proposé, l'emboitement se fait par simple traction de la bavette vers l'arrière en amenant les moyens d'emboîtement et d'emboitement réciproque à s'emboiter les uns dans les autres sous l'action des moyens ressort.

En effet, lors de la mise de la bavette en position prédéfinie de verrouillage, les moyens ressort sont comprimés par les bossages, ce qui a pour effet de soulever la bavette et de permettre l'emboîtement des moyens d'emboîtement avec les moyens réciproques.

Quant au déboitement, il se fait par simple poussée de ladite bavette vers le bas, à l'encontre des moyens ressort, ce qui a pour effet de dégager les moyens d'emboîtement des moyens réciproques, le rideau étant alors rappelé vers sa configuration rétractée au moyen du dispositif de rappel.

Le fait que les zones d'appui des moyens ressort sont en retrait par rapport aux faces de glissement correspondante, ou qu'elles affleurent lesdites faces, implique que lesdites zones d'appui ne frottent pas, ou quasiment pas, contre les pistes lors du glissement des parties latérales sur lesdites pistes pendant le déploiement ou la rétraction du rideau.

Les zones d'appui n'entrent réellement en contact avec les pistes qu'au niveau des bossages, c'est à dire lorsque la bavette est mise en position prédéfinie de verrouillage.

Il en résulte une suppression du risque d'abrasion des zones d'appui par les pistes, ou desdites pistes par lesdites zones d'appui, qui pourrait se produire du fait d'un frottement entre les deux lors du glissement des parties latérales sur lesdites pistes.

D'autres particularités et avantages de l'invention apparaîtront dans la description qui suit, faite en référence aux figures jointes dans lesquelles :

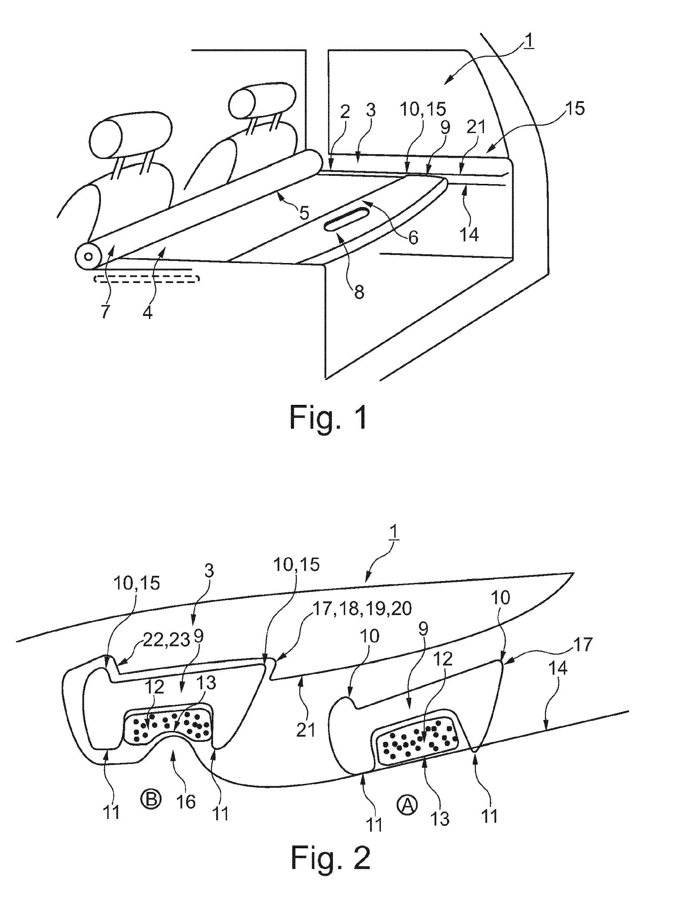

- la figure 1 est une représentation schématique en perspective d'un système selon une réalisation, le rideau étant en configuration partiellement déployée,
- la figure 2 est une vue latérale schématique en coupe longitudinale partielle de détail du système de la figure 1, sur une zone montrant un moyen d'emboîtement réciproque disposé en partie arrière d'une ébénisterie, un moyen d'emboitement étant situé en avant dudit moyen réciproque (A) et emboité avec ledit moyen réciproque (B) de façon à verrouiller la bavette en position prédéfinie arrière.

En référence aux figures, on décrit un système 1 de recouvrement des bagages pour un véhicule automobile, ledit système comprenant un cache bagages 2 et deux ébénisteries latérales 3 de compartiment à bagages, ledit cache bagages comprenant :
- un rideau 4 souple comprenant un bord avant 5 et un bord arrière 6,
- un dispositif de rappel 7 dudit rideau associé audit bord avant, de sorte que ledit rideau soit mobile entre une configuration rétractée de rangement et au moins une configuration déployée de recouvrement - complet ou partiel - des bagages,
- une bavette 8 de rigidification associée le long dudit bord arrière, ladite bavette comprenant deux parties latérales 9, pourvues sur leur face supérieure d'un moyen d'emboitement 10 respectif, lesdites parties latérales présentant une face inférieure de glissement 11,
- deux moyens ressort 12 montés respectivement en dessous desdites parties latérales, lesdits moyens présentant une zone inférieure d'appui 13, chacune desdites zones étant en retrait - c'est à dire décalée vers le haut - par rapport à la face de glissement 11 correspondante ou affleurant ladite face,
chacune desdites ébénisteries comprenant :
- une piste 14 de coulissement longitudinal d'une face de glissement 11 respective,
- un moyen d'emboîtement réciproque 15 disposé au dessus et à distance de ladite piste, de manière à définir une position prédéfinie - intermédiaire ou arrière - de verrouillage de ladite bavette permettant un recouvrement - partiel ou complet - des bagages,
- un bossage 16 disposé sur ladite piste sensiblement à l'aplomb dudit moyen réciproque,
lesdits moyens d'emboitement et d'emboitement réciproque étant agencés pour :
- s'emboiter entre eux sous la poussée desdits moyens ressort, lorsque leur zone d'appui 13 entre en contact avec lesdits bossages par mise dudit rideau en configuration - partiellement ou complètement - déployée, de manière à bloquer ledit rideau dans ladite configuration,
- et pour se déboiter les uns des autres par un appui exercé vers le bas sur ladite bavette, à l'encontre desdits moyens ressort, de manière à permettre le retour dudit rideau vers sa configuration rétractée.

Chaque ébénisterie 3 peut comprendre deux moyens d'emboîtement réciproques 15 et deux bossages 16 correspondants, lesdits moyens étant disposés en parties longitudinale intermédiaire et arrière de ladite ébénisterie de manière à définir respectivement une configuration partiellement déployée et une configuration complètement déployée du rideau 4.

Selon la réalisation représentée, un moyen d'emboîtement 10 comprend une butée 17, le moyen réciproque 15 comprenant une butée réciproque 18.

Selon la réalisation représentée, les butée 17 et butée réciproque 18 présentent des surfaces de contact 19,20 respectives inclinées par rapport à la verticale de sorte que la bavette 8 doive effectuer, outre son mouvement vers le bas, un mouvement vers l'arrière pour permettre le déboitement desdites butées l'une de l'autre.

Un tel agencement permet d'assurer un emboitement de meilleure tenue.

Selon la réalisation représentée, un moyen d'emboîtement 10 comprend en outre une butée additionnelle 22, disposée en arrière de la butée 17, le moyen réciproque 15 comprenant une butée réciproque additionnelle 23, une telle réalisation permettant de sécuriser le verrouillage de la bavette 8.

Selon la réalisation représentée, les moyens ressort 12 sont à base de matériau élastiquement compressible, étant notamment sous la forme de profilés en élastomère, lesdits profilés étant notamment emboités sur les parties latérales 9.

Selon une réalisation non représentée, les moyens ressort 12 sont sous forme de lames métalliques élastiques.

Selon la réalisation représentée, les moyens d'emboitement réciproque 15 sont intégrés à des parois 21 surplombant les pistes 14, lesdites parois étant notamment moulées d'une pièce avec les ébénisteries 3.

## Revendications

1. Système (1) de recouvrement des bagages pour un véhicule automobile, ledit système comprenant un cache bagages (2) et deux ébénisteries latérales (3) de compartiment à bagages, ledit cache bagages comprenant :
• un rideau (4) souple comprenant un bord avant (5) et un bord arrière (6),
• un dispositif de rappel (7) dudit rideau associé audit bord avant, de sorte que ledit rideau soit mobile entre une configuration rétractée de rangement et au moins une configuration déployée de recouvrement des bagages,
• une bavette (8) de rigidification associée le long dudit bord arrière, ladite bavette comprenant deux parties latérales (9), pourvues sur leur face supérieure d'un moyen d'emboitement (10) respectif, lesdites parties latérales présentant une face inférieure de glissement (11),
• deux moyens ressort (12) montés respectivement en dessous desdites parties latérales, lesdits moyens présentant une zone inférieure d'appui (13), chacune desdites zones étant en retrait par rapport à la face de glissement (11) correspondante ou affleurant ladite face,
chacune desdites ébénisteries comprenant :
• une piste (14) de coulissement longitudinal d'une face de glissement (11) respective,
• un moyen d'emboîtement réciproque (15) disposé au dessus et à distance de ladite piste, de manière à définir une position prédéfinie de verrouillage de ladite bavette permettant un recouvrement des bagages,
• un bossage (16) disposé sur ladite piste sensiblement à l'aplomb dudit moyen réciproque,
lesdits moyens d'emboitement et d'emboitement réciproque étant agencés pour:
• s'emboiter entre eux sous la poussée desdits moyens ressort, lorsque leur zone d'appui (13) entre en contact avec lesdits bossages par mise dudit rideau en configuration déployée, de manière à bloquer ledit rideau dans ladite configuration,
• et pour se déboiter les uns des autres par un appui exercé vers le bas sur ladite bavette, à l'encontre desdits moyens ressort, de manière à permettre le retour dudit rideau vers sa configuration rétractée.

2. Système selon la revendication 1, **caractérisé en ce que** chaque ébénisterie (3) comprend deux moyens d'emboîtement réciproques (15) et deux bossages (16) correspondants, lesdits moyens étant disposés en parties longitudinale intermédiaire et arrière de ladite ébénisterie de manière à définir respectivement une configuration partiellement déployée et une configuration complètement déployée du rideau (4).

3. Système selon la revendication 1 ou 2, caractérisé en qu'un moyen d'emboîtement (10) comprend une butée (17), le moyen réciproque (15) comprenant une butée réciproque (18).

4. Système selon la revendication 3, **caractérisé en ce que** les butée (17) et butée réciproque (18) présentent des surfaces de contact (19,20) respectives inclinées par rapport à la verticale de sorte que la bavette (8) doive effectuer, outre son mouvement vers le bas, un mouvement vers l'arrière pour permettre le déboitement desdites butées l'une de l'autre.

5. Système selon l'une quelconque des revendications 1 à 4, **caractérisé en ce que** les moyens ressort (12) sont à base de matériau élastiquement compressible.

6. Système selon la revendication 5, **caractérisé en ce que** les moyens ressort (5) sont sous la forme de profilés en élastomère qui sont notamment emboités sur les parties latérales (9).

7. Système selon l'une quelconque des revendications 1 à 4, **caractérisé en ce que** les moyens ressort (12) sont sous forme de lames métalliques élastiques.

8. Système selon l'une quelconque des revendications 1 à 7, **caractérisé en ce que** les moyens d'emboitement réciproque (15) sont intégrés à des parois (21) surplombant les pistes (14).
